# EUROPEAN PATENT SPECIFICATION

(11) **EP 1 148 255 B1**
(45) Date of publication and mention of the grant of the patent: **06.05.2004**
(21) Application number: 00108566.1
(22) Date of filing: 19.04.2000
(51) Int. Cl.: F16B 5/06

(54) **Fastening clip for holding plastic bed liner together with tray of pickup truck**
Klammer zum Befestigen einer Kunststoffeinlage auf der Ladefläche eines kleinen Lastkraftwagens
Attache pour fixer une coque de revêtement en matière plastique à la benne d'une camionette

(43) Date of publication of application: 24.10.2001
(73) Proprietor: Eastern Polymer Industry Co. Ltd., Samutprakarn 10270 (TH)
(72) Inventor: Vitoorapakorn, Supavadee, Changwat Samutprakarn 10540 (TH)
(74) Representative: Rasch, Michael

(56) References cited:
- US-A- 2 869 921
- US-A- 5 308 133

## Description

Recently, in order to make the bed of a pickup truck more durable against striking forces it has been proposed to cover it with a plastic coating. Thus, it has become increasingly popular to cover the truck bed with a plastic bed liner. In order to hold the plastic bed liner and the pickup truck bed together a clip used for holding the two together must fit various bed sizes and designs. The present invention is especially designed for a pickup truck with a flare-edged bed rail.

Present fastening clips require holes to be drilled into the truck bed or side walls which may lead to rust.

For example, US-A-5 308 133 discloses a snap-type clip for fastening a plastic bed liner onto a pickup truck bed which avoids drilling of the truck bed walls. In this prior arrangement the clip has a hook on one end for fastening to the bed liner and the other U-shaped end surrounds the bed liner and bed wall. As the hook may break due to sudden impacts or vibrational force this would lead to a disconnection between liner and bed.

The present invention attempts to solve the problem of truck bed drilling and is particularly designed for a pickup with a flare-edged bed rail. It is thus an object of the invention to provide a fastening clip for holding a plastic bed liner onto a pickup truck bed which does not require drilling of the truck bed and which guarantees a secure connection between liner and bed.

This object is met by the invention as set out in claim 1.

The clip according to the invention can be put on the edge of the truck bed rail with no drilling required. The upper surface of the clip contains a threaded hole, the height of the raised part of which may be the same as the thickness of the plastic bed liner. One end of the clip is bent inwards in U-shape. The stainless clip with its inner surface coated with elastic material is placed between the truck bed and the plastic bed liner.

It is easy to install thanks to its small size and it can firmly fasten the plastic bed liner onto the truck bed.

Since such a pickup model provides a small area for fastening the plastic bed liner onto the truck bed, the U-shaped clip placed between the two needs appropriate design.

The invention will futher be described taking reference to the accompanying drawings in which
Fig. 1 shows the positions of the clips when installed between the plastic bed liner and the truck bed.
Fig. 2 shows the side view of the fastening clip.
Fig. 3 shows the front view of the fastening clip.
Fig. 4 shows the top view of the fastening clip.
Fig. 5 is the perspective view of the fastening clip installed between the plastic bed liner and the truck bed.

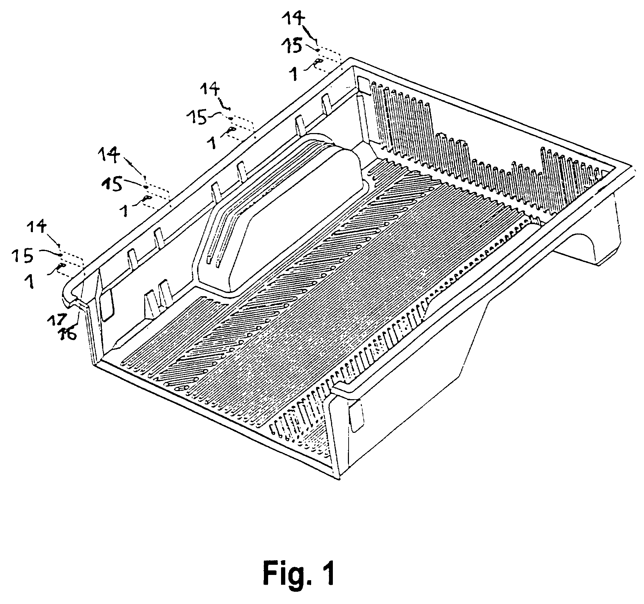

Fig. 1 shows the positions of the clips installed on the flared edge of a truck bed rail **13**. The stainless clips, the inner parts of which are covered with elastic material **7**, are put between the plastic bed liner **17** and the truck bed without drilling the latter. Four of them are placed on each side of the truck bed rails **13** at appropriate distances.

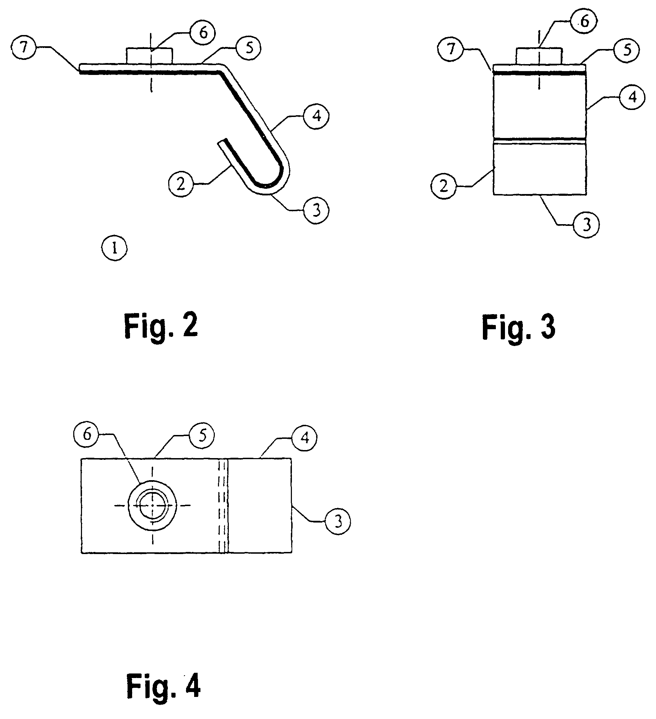

Fig. 2 is the side view of the clip illustrating the upper surface **5** with a threaded center hole **6** of the same height as the plastic bed liner **17**. The inside part of the hole **6** is threaded for a screw **14** and a washer **15**. One end of the upper surface **5** leads to an extending part **4** pointing downwards at an obtuse angle and then bent in towards the upper surface **5** like the U-shapes (**2** and **3**) for fastening the truck bed. The inner surface of the clip is coated with elastic material **7**.

Fig. 3 more clearly shows the front view of the clip. The threaded hole **6** in the clip has the same diameter as the hole drilled in the plastic bed liner **17**. The hole **6** and the plastic bed liner are held together by a screw while the U-shaped part is fastened to the flare edge of truck bed rail.

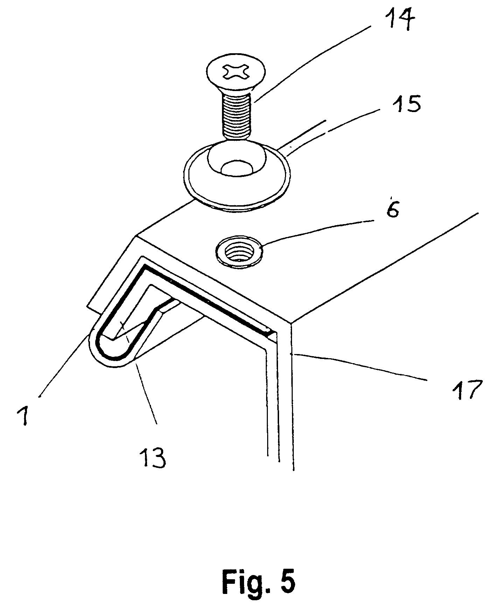

Fig. 5 is an enlarged view to show the installation of clips between the truck bed and the plastic bed liner **17**. The edge of the truck bed rail **13** flares from the pickup bed. The clip **1** is placed between the edge of the truck bed rail **13** and that of the plastic bed liner **17**. The U-shaped, inwards-bending end of the clip can tightly hold the flare edge of the truck bed rail **13**. The upper surface of the clip contains a hole threaded through the plastic bed liner **17**. The height of the raised part of the threaded hole **6** is the same as the thickness of the plastic bed liner. The washer **15** and the screw **14** are for threading through the hole **6**. The inner surface of the clip is coated with elastic material.

## Claims

1. A clip for fastening a plastic bed liner onto a pickup truck bed, wherein a upper surface part (5) of said clip (1) comprises a hole (6) protruding upwardly from said upper surface part (5), an extending part (4) extending from an end of said upper surface part (5) downwards at an angle and then bent in towards the upper surface part (5) in U-shape (2, 3) for holding an edge of the truck bed rail (13), the inner surface of said clip (1) being coated with elastic coating (7).

2. The fastening clip of claim 1, wherein the protruding part of said hole (6) in the clip (1) has the same height as the thickness of said plastic bed liner (17).

3. The fastening clip of claim 1, wherein the hole (6) in the clip (1) is threaded for receiving a threaded screw (14) and a washer (15).

4. The fastening clip of claim 1, wherein at least one clip (1) fastens the edge of the truck bed rail.

## Patentansprüche

1. Eine Klammer zum Befestigen einer Kunststoffeinlage auf der Ladefläche eines kleinen Lastkraftwagens, wobei ein oberes Oberflächenteil (5) der Klammer (1) eine Öffnung (6) aufweist, die von dem oberen Oberflächenteil (5) aus nach oben vorsteht, wobei ein Verlängerungsteil (4) sich von einem Ende des oberen Oberflächenteils (5) aus in einem Winkel nach unten erstreckt und dann in Richtung des oberen Oberflächenteils (5) in U-Form (2, 3) abgebogen ist, um eine Kante der Lastkraftwagen-Ladeflächenschiene (13) zu halten, wobei die innere Oberfläche der Klammer (1) mit einem elastischen Überzug (7) beschichtet ist.

2. Die Halteklammer nach Anspruch 1, wobei der vorstehende Teil der Öffnung (6) in der Klammer (1) die gleiche Höhe wie die Dicke der Kunststoffeinlage (17) hat.

3. Die Halteklammer nach Anspruch 1, wobei die Öffnung (6) in der Klammer (1) ein Gewinde hat zur Aufnahme einer Gewindeschraube (14) und einer Beilagscheibe (15).

4. Die Halteklammer nach Anspruch 1, wobei wenigstens eine Klammer (1) die Kante der Lastkraftwagen-Ladeflächenschiene fixiert.

## Revendications

1. Pince de fixation d'une garniture de benne en matière plastique sur la benne d'une camionnette, dans laquelle une partie (5) de surface supérieure de ladite pince (1) comprend un trou (6) qui déborde vers le haut par rapport à ladite partie (5) de surface supérieure, une partie en débord (4) s'étendant depuis une extrémité de ladite partie (5) de surface supérieure obliquement vers le bas et étant ensuite repliée en forme de U (2, 3) vers l'intérieur en direction de la partie (5) de surface supérieure pour serrer un bord de la rambarde (13) de la benne de la camionnette, la surface intérieure de ladite pince étant revêtue d'un revêtement élastique (7).

2. Pince de fixation selon la revendication 1, dans laquelle la partie en débord dudit trou (6) de la pince (1) a la même hauteur que l'épaisseur de la garniture (17) de benne en matière plastique.

3. Pince de fixation selon la revendication 1, dans laquelle le trou (6) de la pince (1) est fileté pour recevoir une vis filetée (14) et une rondelle (15).

4. Pince de fixation selon la revendication 1, dans laquelle au moins une pince (1) serre le bord d'une rambarde de la benne de la camionnette.
